# EUROPEAN PATENT APPLICATION

(11) **EP 1 843 561 A2**
(43) Date of publication of application: **10.10.2007**
(21) Application number: 07007195.6
(22) Date of filing: 05.04.2007
(51) Int. Cl.: H04M 1/72

(54) **Mobile device and transmission restriction method**

(30) Priority: 06.04.2006 JP 2006105407
(71) Applicant: NTT DoCoMo, Inc., Chiyoda-ku Tokyo 100-6150 (JP)
(72) Inventor: Nagasawa, Hideyuki, Tokyo 100-6150 (JP); Masuda, Kyoko, Tokyo 100-6150 (JP)
(74) Representative: GROSSE BOCKHORNI SCHUMACHER

(57) **Abstract**

To cause a mobile device not to perform data transmission for an appropriate time.

An MTF receives a reject signal to the effect that data transmission is restricted, the reject signal including time information that indicates a restriction time for restricting data transmission to indicate that the data transmission is to be restricted. In a TAF, a timer part times the restriction time indicated by the time information using a time when the reject signal was received as a starting point, and a communication control part performs transmission restriction to restrict data transmission based on the received reject signal and, if the restriction time specified by the time information is timed by the timer part, can cancel the transmission restriction.

## Description

### BACKGROUND OF THE INVENTION

### Field of the Invention

The present invention relates to a mobile device and transmission restriction method for restricting data transmission.

### Related Background of the Invention

It is known that, if an amount of data communicated over a network reaches a predetermined threshold, data communication is restricted so that the network is not overloaded. A telephone described in Patent Document 1, for example, determines that, if the number of transmissions and that of incoming calls per unit time reach a certain level of threshold, the network is in a congestion state and shifts into transmission restriction mode, and if an exchange detects call origination from the telephone, the exchange outputs a tone signal indicating that call origination is being restricted to the telephone.

[Patent Document 1] Japanese Patent Application Laid-Open No. Hei 10-243094

### SUMMARY OF THE INVENTION

However, according to a technology described in Patent Document 1, since a signal reaches an exchange, processing for call origination has an influence on up to the exchange. Thus, the technology described in Patent Document 1 has its limits when reducing network load. Also, in the technology described in Patent Document 1, the telephone side as a terminal determines whether to perform transmission restriction. Thus, the telephone side cannot determine accurately whether the network is actually loaded. Further, the telephone side cannot know how long transmission restriction should be performed.

Thus, an object of the present invention is to provide a mobile device, a server apparatus, a communication system, and a transmission restriction method that can reduce network load based on an amount of communicated data and also restrict data transmission from the mobile device for an appropriate time.

To solve the above problems, a mobile device according to the present invention includes: a receiving means for receiving restriction information to the effect that data transmission is to be restricted, the restriction information including time information that indicates a restriction time for restricting data transmission; a timer means for timing the restriction time indicated by the time information based on a time when the restriction information is received by the receiving means; and a communication control means for performing transmission restriction so that data transmission is not made based on the restriction information received by the receiving means and canceling the transmission restriction when the restriction time determined by the time information is timed by the timer means.

According to the present invention, it is possible to receive restriction information to the effect that data transmission is to be restricted, the restriction information including time information that indicates a restriction time for restricting data transmission, to time the restriction time indicated by the time information based on a time when the restriction information is received by the receiving means, and to perform transmission restriction so that data transmission is restricted based on the received restriction information and also to cancel the transmission restriction when the restriction time determined by the time information is timed. If a large amount of data is originated from a mobile device, data transmission from the mobile device can thereby be restricted, leading to reduced network load. Also, transmission restriction can be performed for a restriction time determined for the mobile device, reducing network load for a fixed time.

Also, the mobile device in the present invention includes a mail receiving means for receiving a mail with the description to the effect that the transmission restriction based on the restriction information is canceled, wherein the communication control means preferably cancels the transmission restriction when a mail with the description to the effect that the transmission restriction is canceled is received by the mail receiving means.

According to the present invention, transmission restriction can be canceled when a mail with the description to the effect that the transmission restriction is canceled is received by the mail receiving means. Data origination restriction can thereby be canceled swiftly in case of an emergency when, for example, a disaster hits, and as a result, a user-friendly mobile device can be provided.

Also, the mobile device in the present invention includes a detachable external memory storing subscriber information of the mobile device, wherein the communication control means preferably cancels the transmission restriction when the external memory is replaced.

According to the present invention, the transmission restriction can be canceled when the detachable external memory storing subscriber information of a mobile device is replaced. When external memory such as UIM is replaced, a need for performing transmission restriction for a subscriber of newly inserted external memory can thereby be eliminated. Thus, a user-friendly mobile device can be provided.

A server apparatus in the present invention includes: a measurement means for measuring a data amount of packet data transmitted and received to and from a plurality of mobile devices distinctively for each mobile device; and a transmitting means for transmitting to a mobile device restriction information to the effect that data transmission is to be restricted, the restriction information including time information that indicates a restriction time for restricting data transmission when it is determined that the data amount measured by the measurement means per unit time in the mobile device exceeds a predetermined amount.

According to the present invention, it is possible to measure a data amount of packet data transmitted and received to and from a plurality of mobile devices distinctively for each mobile device and to transmit to a mobile device restriction information to the effect that data transmission is to be restricted, the restriction information including time information that indicates a restriction time for restricting data transmission when it is determined that the data amount measured by the measurement means per unit time in the mobile device exceeds a predetermined amount. When a large amount of data is originated from a mobile device per unit time, data transmission from the mobile device can thereby be restricted, leading to reduced network load. Also, transmission restriction can be performed for a restriction time determined for the mobile device, reducing network load for a fixed time.

A communication system in the present invention includes a mobile device and a server apparatus measuring a data amount of data transmitted and received in the mobile device, wherein the server apparatus, having: a measurement means for measuring the data amount of packet data transmitted and received to and from the mobile device; and a transmitting means for transmitting to the mobile device restriction information to the effect that data transmission is to be restricted, the restriction information including time information that indicates a restriction time for restricting data transmission when it is determined that the data amount measured by the measurement means per unit time exceeds a predetermined amount, and the mobile device, having: a receiving means for receiving restriction information to the effect that the data transmission is to be restricted, the restriction information including time information that indicates a restriction time for restricting data transmission; a timer means for timing the restriction time indicated by the time information based on a time when the restriction information is received by the receiving means; and a communication control means for performing transmission restriction so that data transmission is not made based on the restriction information received by the receiving means and canceling the transmission restriction when the time determined by the restriction time is timed by the timer means.

A transmission restriction method of a communication system in the present invention includes a mobile device and a server apparatus measuring a data amount of data transmitted and received in the mobile device, wherein the server apparatus; having: a measurement step of measuring the data amount of packet data transmitted and received to and from the mobile device; and a transmitting step of transmitting to the mobile device restriction information to the effect that data transmission is to be restricted, the restriction information including time information that indicates a restriction time for restricting the data transmission when it is determined that the data amount measured by the measurement step per unit time exceeds a predetermined amount, and the mobile device; having: a receiving step of receiving restriction information to the effect that the data transmission is to be restricted, the restriction information including time information that indicates a restriction time for restricting the data transmission; a timer step for timing the time indicated by the restriction time based on a time when the restriction information is received by the receiving step; and a communication control step for performing transmission restriction so that data transmission is not made based on the restriction information received by the receiving step and canceling the transmission restriction when the time determined by the restriction time is timed by the timer step.

According to the present invention, when a large amount of data is originated from a mobile device, data transmission thereof can be restricted, leading to reduced network load. Also, transmission restriction can be performed for a predetermined restriction time, reducing network load for a fixed time.

The present invention can restrict data transmission from a mobile device when a large amount of data is originated from the mobile device, leading to reduced network load. Also, transmission restriction can be performed from the mobile device for a predetermined restriction time, reducing network load for a fixed time.

### BRIEF DESCRIPTION OF THE DRAWINGS

Fig. 1 is a system block diagram showing a communication system.

Fig. 2 is a block diagram showing a logical configuration of each module of a mobile device 100.

Fig. 3 is a block diagram showing the configuration of a conversion server 200.

Fig. 4 is a sequence diagram showing operations of the mobile device 100 and conversion server 200.

Fig. 5 is an explanatory view showing a concrete example of a message displayed in the display part of a TE 103.

### DESCRIPTION OF THE PREFERRD EMBODIMENTS

The present invention can easily be understood by considering a detailed description below with reference to attached drawings shown for an embodiment. The embodiment of the present invention will be described with reference to the attached drawings. If possible, the same reference numeral is attached to the same component to leave out a duplicate description.

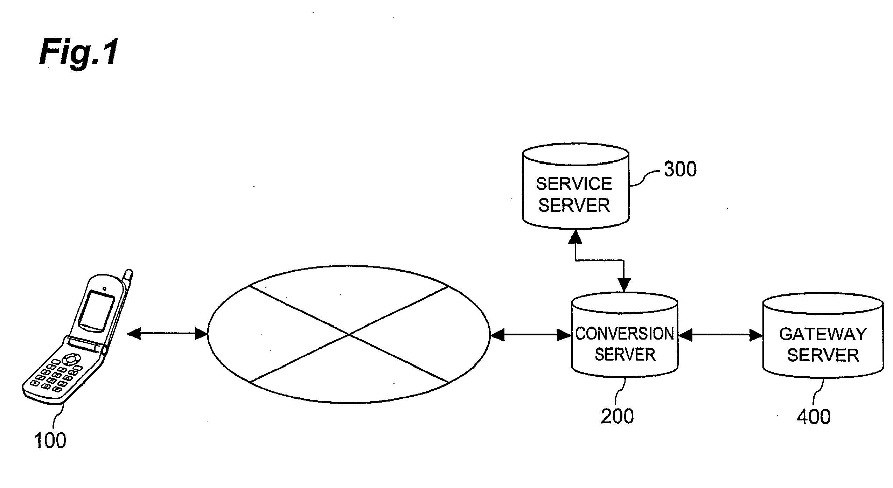

Fig. 1 is a system block diagram showing a communication system including a mobile device 100, a conversion server 200, a service server 300, and a gateway server 400 in the present embodiment.

The mobile device 100 performs data communication with the gateway server 400 via the conversion server 200. The gateway server 400 transmits data (for example, packet data) transmitted from the mobile device 100 to another mobile device or Web site to be a destination.

Here, the conversion server 200 is arranged between the mobile device 100 and the gateway server 400. The conversion server 200 counts an amount of data transmitted from the mobile device 100 and also performs protocol conversion processing for radio communication. The conversion server 200 causes the service server 300 to store the counted amount of data distinctively for each mobile device. Each time call origination processing is performed by the mobile device 100, the conversion server 200 extracts the amount of data of one mobile device 100 from among amounts of data stored for each mobile device from the service server 300 to determine whether or not the extracted amount of data is equal to or more than a predetermined threshold. Then, if the conversion server 200 determines that the extracted amount of data is equal to or more than the predetermined threshold, the conversion server 200 transmits a reject signal, which is restriction information indicating an instruction to the effect that transmission restriction is to be performed, to the mobile device 100. The reject signal to be transmitted includes restriction time information indicating a restriction time of the transmission restriction.

By managing the amount of data transmitted from the mobile device 100 by the conversion server 200 and also, depending on the amount of data, by transmitting to the mobile device 100 a reject signal with an instruction to the effect that the data transmission is restricted, from the conversion server 200, as described above, the mobile device 100 that received the reject signal can restrict the data transmission. Configurations of the mobile device 100 and conversion server 200 will be described below.

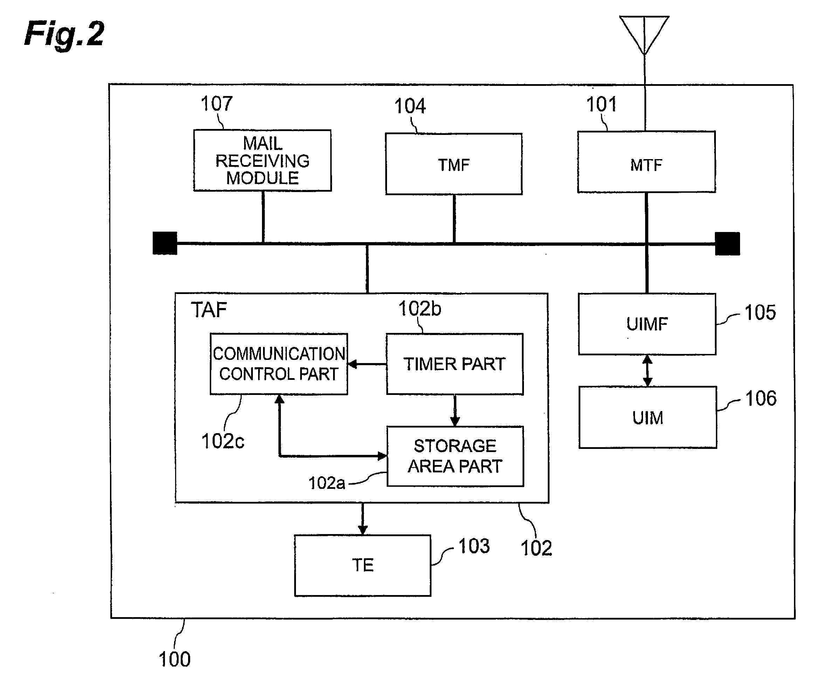

Fig. 2 is a block diagram showing a logical configuration of each module of the mobile device 100. The mobile device 100 includes an MTF (Mobile Terminal Function) 101, a TAF (Terminal Adaptation Function) 102, a TE (Terminal Equipment) 103, a TMF (Terminal Management Function) 104, a UIMF (User Identified Module Function) 105, a UIM (User Identified Module) 106, and a mail receiving module 107. Each component will be described below.

The MTF 101 is a module for performing radio communication and can perform radio communication with a radio base station using a radio communication circuit (not shown). Then, the MTF 101 performs establishment of radio communication, service request processing, authentication processing, and an encryption procedure for the gateway server 400 via the radio base station and the conversion server 200. If a reject signal is received from the conversion server 200, the MTF 101 outputs time information included in the reject signal to the TAF 102 as a restriction request.

The TAF 102 is a part that controls the TE 103. In the present embodiment, an operation part in which buttons are arranged and a display part that displays information are assumed as the TE 103, and the TAF 102 is a module controlling the operation part and display part. The TAF 102 outputs a transmission request received from the operation part of the TE 103 to the MTF 101 and also a transmission restriction message created based on the restriction request output from the MTF 101 to the TE 103 to cause the display part of the TE 103 to display a message indicating that transmission is being restricted. In the present embodiment, the TAF 102 can recognize that a restriction request of data transmission has been output from the MTF 101 by recognizing that restriction time information is included in the restriction request output from the MTF 101. Then, if the TAF 102 recognizes that a restriction request of data transmission has been output, the TAF 102 restricts data transmission using a storage area part 102a, a timer part 102b, and a communication control part 102c.

The storage area part 102a is a storage area storing restriction time information included in a restriction request output from the MTF 101 to indicate a restriction time and a storage area inside the TAF 102.

The timer part 102b times a timer. After timing a restriction time indicated by the restriction time information stored in the storage area part 102a, the timer part 102b outputs to notify the communication control part 102c that the restriction time has been timed.

The communication control part 102c is a part that determines whether or not a signal such as a call origination instruction output from the operation part constituted as the TE 103 should be output to the MTF 101. After receiving the call origination instruction output from the operation part of the TE 103, the communication control part 102c determines whether or not restriction time information stored in the storage area part 102a is stored (including determination whether or not the restriction time is zero). If the communication control part 102c determines that restriction time information is stored in the storage area part 102a, after determining that call origination is being restricted, the communication control part 102c ignores instruction signals related to call origination processing such as call origination instructions output from the operation part of the TE 103 to perform processing that does not output to the MTF 101 and also outputs a message indicating that call origination is being restricted to the display part constituted as the TE 103.

After receiving a notification that the restriction time has been timed from the timer part 102b, the communication control part 102c performs processing to delete restriction time information from the storage area part 102a or to set zero as the restriction time.

The TE 103 is hardware controlled by the TAF 102 and includes the operation part and display part in the present embodiment.

The TMF 104 is a control module controlling an entire device of the mobile device 100. If, for example, the UIM 106 is replaced by another UIM in the present embodiment, the TMF 104 cancels transmission restriction by performing processing to delete restriction time information stored in the storage area part 102a of the TAF 102 (or to set zero as the restriction time).

If the mail receiving module 107 receives an Internet electronic mail or a mail by SMS (Short Message service) via the MTF 101 and the TMF 104 determines that a message to the effect that transmission restriction is canceled is described in the mail received by the mail receiving module 107, the TMF 104 cancels the transmission restriction by performing processing to delete restriction time information stored in the storage area part 102a of the TAF 102 (or to set zero as the restriction time).

The UIMF 105 is a module for controlling the UIM 106 and performs a control operation to read data stored in the UIM 106 or to cause the UIM 106 to store data.

The UIM 106 is an external memory mounted detachably to the mobile device 100 and stores subscriber information of the mobile device 100.

The mail receiving module 107 is a module for receiving an Internet electronic mail or a mail by SMS and can receive an Internet electronic mail or a mail by SMS in which a message to the effect that restriction is canceled is described.

The mobile device 100 configured as described above can transmit and receive data via the MTF 101 and if, for example, a reject signal indicating transmission restriction is received via the MTF 101, an instruction of the transmission restriction is set to the TAF 102 so that the TAF 102 can be controlled to ignore operations instructed by the TE 103. Also, if the timer part 102b times a time indicated by the restriction time, a message to the effect that restriction is canceled is received, or the UIM 106 is replaced by another UIM, the transmission restriction of the mobile device 100 is canceled.

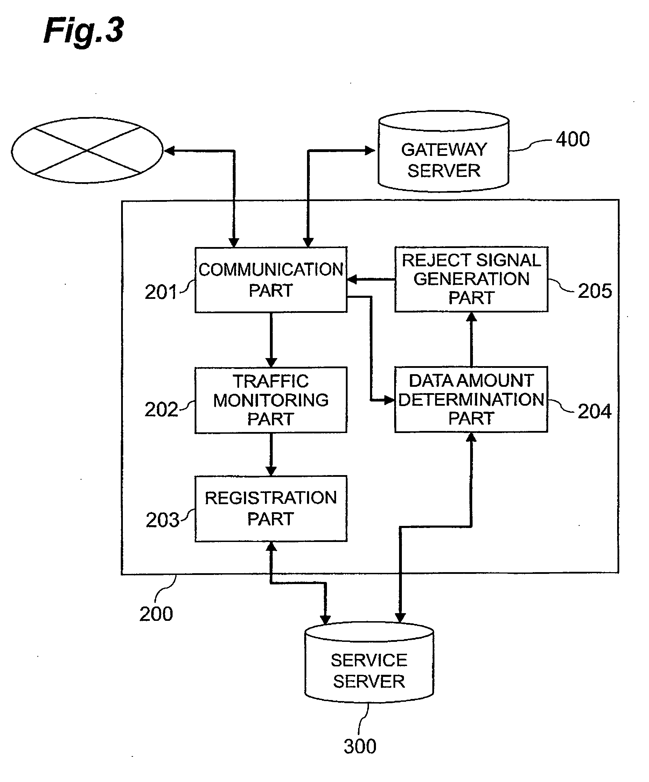

Next, the conversion server 200 that measures an amount of data transmitted from the mobile device 100 and causes the service server 300 to store the amount of data distinctively for each mobile device. Fig. 3 is a block diagram showing the configuration of the conversion server 200. The conversion server 200 includes a communication part 201, a traffic monitoring part 202, a registration part 203, a data amount determination part 204, and a reject signal generation part 205. In addition, a protocol conversion part (not shown) performing protocol conversion in radio communication, which is a main function of the conversion server 200, is provided.

The communication part 201 is a part for receiving data (for example, packet data) transmitted from the mobile device 100 and outputs data to the traffic monitoring part 202 to measure the amount of received data.

The traffic monitoring part 202 is a part for monitoring an amount of data received by the communication part 201 and measuring the amount of data.

The registration part 203 is a part for causing the service server 300 to store the amount of data measured by the traffic monitoring part 202, and causes the service server 300 to store the amount of data distinctively for each mobile device, which is a source of data, and also updates stored amounts of data.

The data amount determination part 204 determines an amount of data transmitted and received in the mobile device 100 per unit time when data received by the communication part 201 is determined to be a start signal indicating data transmission from the mobile device 100. More specifically, the data amount determination part 204 establishes a communication connection with the service server 300 to extract the amount of data of the mobile device 100 stored in the service server 300. Then, the data amount determination part 204 calculates the extracted amount of data per unit time of the amount of data in the mobile device 100. If the data amount determination part 204 determines that the calculated amount of data per unit time is larger than a preset specified amount, the data amount determination part 204 makes a determination to select the mobile device 100 as a restriction target of data transmission. The data amount determination part 204, which has determined to select the mobile device 100 as the restriction target of data transmission, outputs an instruction to generate and output a reject signal to the reject signal generation part 205 to notify the mobile device 100 that the mobile device 100 has become the restriction target of data transmission.

The reject signal generation part 205 generates a reject signal in response to a call origination signal from the mobile device 100 and transmits it to the mobile device 100 to notify the mobile device 100 that the mobile device 100 has become the restriction target of data transmission. More specifically, the reject signal generation part 205 adds restriction time information indicating a restriction time to the reject signal and transmits it to the mobile device 100 via the communication part 201 to indicate that call origination from the mobile device 100 is to be restricted. While transmitting the reject signal to the mobile device 100, the reject signal generation part 205 performs processing to disconnect communication with the gateway server 400.

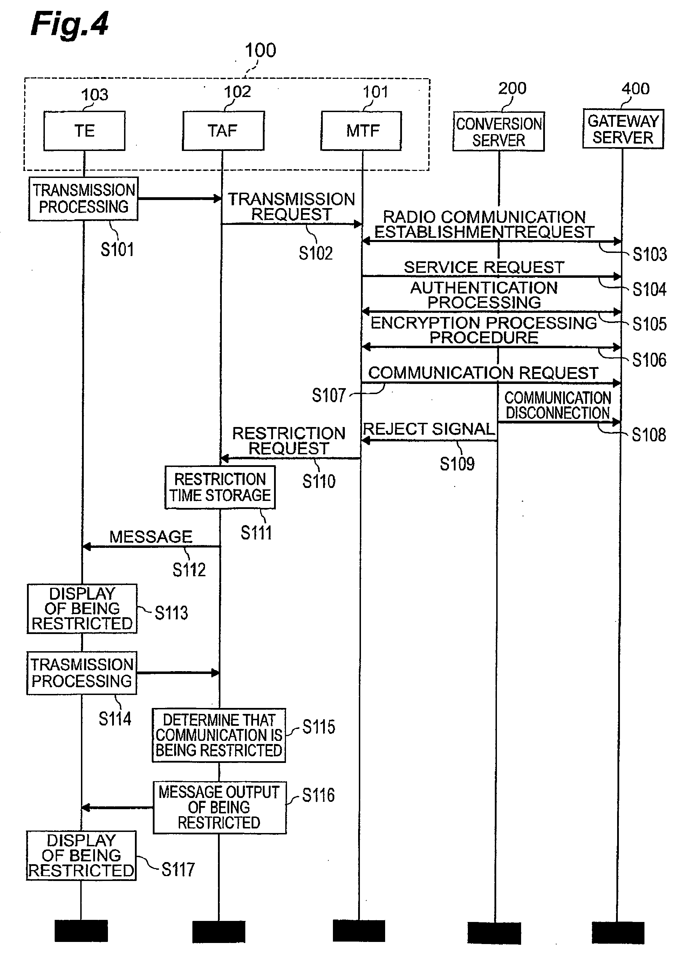

Next, operations of the mobile device 100 and conversion server 200 will be described. Fig. 4 is a sequence diagram showing operations of the mobile device 100 and conversion server 200.

Call origination operation is performed when a user manipulates the operation part, the TE 103, to perform a call origination processing (S101). The TAF 102 outputs a call origination request to the MTF 101 based on the call origination processing input from the operation part of the TE 103 (S102). The MTF 101 establishes radio communication with the gateway server 400 based on the call origination request (S103). After establishing the radio communication, a request signal in which a communication bearer or the like is specified as a service request is transmitted from the MTF 101 to the gateway server 400 (S104). Then, authentication processing (S105) and an encryption procedure (S106) are performed for the gateway server 400 and a communication request is transmitted from the MTF 101 to the gateway server 400 (S107). A command for requesting to perform packet communication, for example, is set to the communication request and a URL or electronic mail address is set as a destination. Further, a command indicating a communication method whether electronic mail communication or WEB access is set.

After the communication request is transmitted, if the data amount determination part 204 determines that the amount of data transmitted from the mobile device 100 per unit time is larger than the preset specified amount, the conversion server 200 disconnects communication with the gateway server 400 (S108). A reject signal including restriction time information indicating a restriction time of transmission restriction is generated for the mobile device 100 by the reject signal generation part 205 based on an instruction from the data amount determination part 204. Then, the generated reject signal is transmitted to the mobile device 100 (S109).

In the mobile device 100, the reject signal is received by the MTF 101 and a restriction request including restriction time information indicating the restriction time is output from the MTF 101 to the TAF 102 (S110). In the TAF 102, based on the received restriction request (including the restriction time information), the restriction time information is stored in the storage area part 102a and timing by the timer part 102b is started (S111). A message to the effect that call origination is being restricted is generated by the communication control part 102c in the TAF 102 and the message is output to the TE 103 (S112). The display part of the TE 103 displays the message to the effect that call origination is being restricted (S113).

Then, after call origination processing is performed by the user through manipulation of the operation part of the TE 103 (S114), if the communication control part 102c determines that restriction time information is stored in the storage area part 102a, the TAF 102 determines that call origination of the mobile device 100 is being restricted (S115). Then, a message to the effect that call origination is being restricted is generated by the communication control part 102c of the TAF 102 before being output to the TE 103 (S 116). The display part of the TE 103 displays the message to the effect that call origination is being restricted (S117) so that the user can be notified that call origination is being restricted. Incidentally, if the restriction time indicated by the restriction time information stored in the storage area part 102a is timed by the timer part 102b, the transmission restriction is canceled by the communication control part 102c.

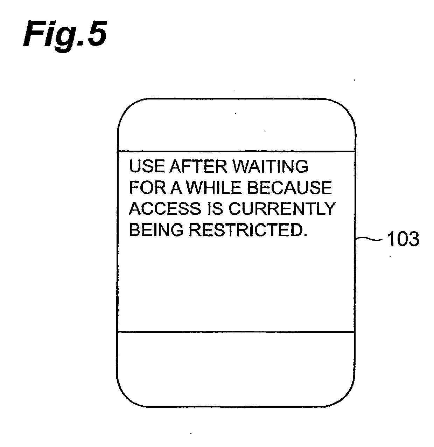

Here, a concrete example of a message indicating that call origination is being restricted will be described using Fig. 5. Fig. 5 is an explanatory view showing a concrete example of a message displayed in the display part of the TE 103. As shown in Fig. 5, a message "Use after waiting for a while, because access is currently being restricted." is displayed in the display part of the TE 103 so that the user can recognize that call origination of the mobile device is currently being restricted.

Next, effects of the mobile device 100 and conversion server 200 in the present embodiment will be described. The mobile device 100 in the present embodiment receives through the MTF 101 a reject signal including a restriction time for restricting data transmission to indicate that the data transmission is to be restricted, times a time indicated by the restriction time using the timer part 102b of the TAF 102 based on a time when the reject signal was received, performs transmission restriction to restrict data transmission based on the received reject signal and, if the time specified by the restriction time is timed by the timer part 102b, can cancel the transmission restriction. When a large amount of data is originated from the mobile device 100 per unit time, the data transmission can thereby be restricted, leading to reduced network load. Also, network load can be reduced for a fixed time by performing transmission restriction for a fixed restriction time.

If an Internet electronic mail (or a mail of SMS) in which a message to the effect that transmission restriction is to be canceled based on a reject signal is received by the mail receiving module 107, the communication control part 102c of the mobile device 100 in the present embodiment can cancel the transmission restriction. Data transmission restriction can thereby be canceled swiftly in the mobile device 100 by transmitting a mail to the effect that the transmission restriction is to be canceled from a communications carrier or the like to the mobile device 100 in case of an emergency when, for example, a disaster hits, and as a result, the user-friendly mobile device 100 can be provided.

If the detachable UIM 106 storing subscriber information of the mobile device 100 is replaced, the communication control part 102c of the mobile device 100 in the present embodiment can cancel the transmission restriction. When the UIM 106 is replaced, a need for forcing transmission restriction for a subscriber described in newly inserted UIM can thereby be eliminated. Thus, the user-friendly mobile device 100 can be provided.

The conversion server 200 in the present embodiment can measure a data amount of packet data transmitted and received to and from a plurality of mobile devices using the traffic monitoring part 202 distinctively for each mobile device and, if the traffic monitoring part 202 determines that the data amount measured per unit time for a mobile device exceeds a preset specified amount, generate a reject signal including time information that indicates a restriction time for restricting data transmission to indicate that the data transmission is to be restricted by the reject signal generation part 205 before the reject signal is transmitted by the communication part 201. When a large amount of data is originated from a mobile device, data transmission thereof can thereby be restricted, leading to reduced network load. Also, network load can be reduced for a fixed time by performing transmission restriction for a fixed restriction time in a mobile device.

## Claims

1. A mobile device, comprising:
a receiving means for receiving restriction information to the effect that data transmission is to be restricted, the restriction information including time information that indicates a restriction time for restricting data transmission;
a timer means for timing the restriction time indicated by the time information based on a time when the restriction information is received by the receiving means; and
a communication control means for performing transmission restriction so that data transmission is not made based on the restriction information received by the receiving means and canceling the transmission restriction when the restriction time determined by the time information is timed by the timer means.

2. The mobile device according to claim 1, further comprising a mail receiving means for receiving a mail with the description to the effect that the transmission restriction based on the restriction information is canceled, wherein
the communication control means cancels the transmission restriction when a mail with the description to the effect that the transmission restriction is canceled is received by the mail receiving means.

3. The mobile device according to claim 1 or 2, further comprising a detachable external memory storing subscriber information of the mobile device, wherein
the communication control means cancels the transmission restriction when the external memory is replaced.

4. A server apparatus, comprising:
a measurement means for measuring a data amount of packet data transmitted and received to and from a plurality of mobile devices distinctively for each mobile device; and
a transmitting means for transmitting to a mobile device restriction information to the effect that data transmission is to be restricted, the restriction information including time information that indicates a restriction time for restricting the data transmission when it is determined that the data amount measured by the measurement means per unit time in the mobile device exceeds a predetermined amount.

5. A communication system comprising a mobile device and a server apparatus measuring a data amount of data transmitted and received in the mobile device, wherein
the server apparatus, including:
a measurement means for measuring the data amount of packet data transmitted and received to and from the mobile device; and
a transmitting means for transmitting to the mobile device restriction information to the effect that data transmission is to be restricted, the restriction information including time information that indicates a restriction time for restricting data transmission when it is determined that the data amount measured by the measurement means per unit time exceeds a predetermined amount, and
the mobile device, including:
a receiving means for receiving restriction information to the effect that the data transmission is to be restricted, the restriction information including time information that indicates a restriction time for restricting data transmission;
a timer means for timing the restriction time indicated by the time information based on a time when the restriction information is received by the receiving means; and
a communication control means for performing transmission restriction so that data transmission is not made based on the restriction information received by the receiving means and canceling the transmission restriction when the time determined by the restriction time is timed by the timer means.

6. A transmission restriction method of a communication system comprising a mobile device and a server apparatus measuring a data amount of data transmitted and received in the mobile device, wherein
the server apparatus; including:
a measurement step of measuring the data amount of packet data transmitted and received to and from the mobile device; and
a transmitting step of transmitting to the mobile device restriction information to the effect that data transmission is to be restricted, the restriction information including time information that indicates a restriction time for restricting data transmission when it is determined that the data amount measured by the measurement step per unit time exceeds a predetermined amount, and
the mobile device; including:
a receiving step of receiving restriction information to the effect that the data transmission is to be restricted, the restriction information including time information that indicates a restriction time for restricting data transmission;
a timer step for timing the time indicated by the restriction time based on a time when the restriction information is received by the receiving step; and
a communication control step for performing transmission restriction so that data transmission is not made based on the restriction information received by the receiving step and canceling the transmission restriction when the time determined by the restriction time is timed by the timer step.
